# EUROPEAN PATENT SPECIFICATION

(11) **EP 2 372 130 B1**
(45) Date of publication and mention of the grant of the patent: **10.07.2013**
(21) Application number: 11157933.0
(22) Date of filing: 11.03.2011
(51) Int. Cl.: F02D 9/10, F02D 11/10, F02B 61/02, F02B 77/00, F02M 35/10, F02M 35/16

(54) **Wiring configuration for throttle body in small vehicle**
Verdrahtungskonfiguration für einen Drosselkörper in einem Kleinfahrzeug
Configuration de câblage pour le corps de papillon dans un petit véhicule

(30) Priority: 16.03.2010 JP 2010058684
(43) Date of publication of application: 05.10.2011
(73) Proprietor: Honda Motor Co., Ltd., Tokyo 107-8556 (JP)
(72) Inventor: IKEDA, Kenichiro, Saitama 351-0193 (JP); KUBOTA, Toshiyuki, Saitama 351-0193 (JP)
(74) Representative: Ilgart, Jean-Christophe

(56) References cited:
- EP-A1- 1 422 404
- DE-A1- 4 032 321
- US-A- 5 711 271
- US-A1- 2001 000 574
- US-A1- 2004 041 117

## Description

### [Technical Field]

This invention relates to a wiring configuration for a throttle body in a small vehicle configured to swingably support a power unit.

### [Background Art]

In a conventional wiring configuration for a throttle body in a small vehicle including a swingably-supported power unit, the throttle body is integrally attached to a control unit having the multiple functions as an actuator, sensor and other components and is wired with a single wiring coupler to connect to an external component.

For example, as shown in the following Patent Literature 1, a single wiring coupler is disposed on the top of the throttle body, orthogonally to the intake path of the throttle body, in the width direction of the vehicle, the wiring coupler being connected with an external coupler.

[Patent Literature 1] Japanese Patent No. 3975065 (FIGS. 3, 4 and 5)

### [Summary of Invention]

### [Technical Problem]

However, the disclosure of the Patent Literature 1 describes that a wide wire extends from the throttle body in the width direction of the vehicle and requires a routing space to deal with the swings of the power unit to the vehicle.
In addition, the challenge in order to share the functions of the control unit among multiple units for improvement of the versatility is to avoid causing the space for wiring to be large.

The present invention has an object to solve the problems in the conventional wiring configuration for the throttle body in a small vehicle including the swingably-supported power unit and provides a wiring configuration for a throttle body in a small vehicle to restrict the space used to route wires and to improve in working efficiency for wire connection while dealing with the swings of the power unit.

### [Solution to Problems]

For the purpose of solving the problems, the invention according to claim 1 is directed to a small vehicle provided with a power unit and a wiring configuration for a throttle body, the power unit including integratedly an internal combustion engine and a power transmission system for a rear wheel, the power unit being swingably mounted on a body frame and disposed below a seat. The wiring configuration includes a throttle body that controls the amount of air-intake of the internal combustion engine and is disposed between the power unit and the seat; an opening sensor that detects the degree of throttle opening and is provided at an end of a throttle valve shaft of the throttle body, the throttle valve shaft being aligned along the width direction of the vehicle; an actuator that controls the throttle body and is attached to the throttle body, in the vicinity of the opening sensor, in the same direction as the opening sensor; and a first wiring coupler that connects the opening sensor to an external component and a second wiring coupler that connects the actuator to the external component, the first and second wiring couplers being individually arranged along the front/rear direction so as to intersect with respect to the throttle valve shaft.

The invention of claim 2 is directed to the wiring configuration for the throttle body in the small vehicle of claim 1, wherein the opening sensor and the actuator are aligned in the up/down direction on the throttle body, and the second wiring coupler of the actuator is disposed away from the intake path of the throttle body and inclined at an acute angle so as to be near the intake path.

The invention of claim 3 is directed to the small vehicle of claim 2, wherein the small vehicle is provided with a hanging portion under the power unit, for holding the power unit on the body frame, and the throttle body is positioned immediately above the hanging portion and higher than the power unit.

The invention of claim 4 is directed to the small vehicle of claim 3, wherein the body frame of the small vehicle includes a pair of left and right rear frames and a cross member attached therebetween, the cross member is placed in front of the first and second wiring couplers, and wires from both of the wiring couplers are guided to an area surrounded by the cross member, the pair of left and right rear frames and the upper surface of the power unit.

The invention of claim 5 is directed to the small vehicle of claim 4, wherein the wires are turned in the area backward to the rear of the vehicle, turned forward again in a U shape so as to cross the vehicle in the width direction in front of the rear wheel, and coupled with a wire of a starter motor disposed on the upper surface of the power unit.

The invention of claim 6 is directed to the small vehicle of claim 4 or 5, wherein the cross member is curved so as to upwardly project to the front of the vehicle.

The invention of claim 7 is directed to the small vehicle of any of claims 4 to 6, wherein one of the pair of left and right rear frames is formed at a different position in the up/down direction from the other so that the cross member is positioned near both of the wiring couplers.

The invention of claim 8 is directed to the small vehicle of claim 2, wherein one of the opening sensor and the actuator is provided with attachment members aligned with each other in the front/rear direction of the vehicle, and the other of the opening sensor and the actuator is provided with an attachment member aligned on a line in the up/down direction between the attachment members.

The invention of claim 9 is directed to the small vehicle of claim 1 or 8, wherein the throttle body is held by an inlet manifold formed independently from a cylinder head of the internal combustion engine, and an area in which an attachment tool for attaching the inlet manifold to the cylinder head is inserted overlaps the first and second wiring couplers when viewed from the width direction of the vehicle and positioned nearer the center of the vehicle than the wiring couplers when viewed in the up/down direction.

The invention of claim 10 is directed to the small vehicle of claim 9, wherein the wires of both of the wiring couplers are joined nearer the inlet manifold side than a mating surface between the inlet manifold and the throttle body.

### [Advantageous Effects of Invention]

In the small vehicle according to the invention of claim 1, a plurality of independent sensor and actuator are attached to the throttle body in an identical direction, thereby enhancing assembling efficiency of the throttle body.
In addition, the arrangement of the wiring couplers in the intersecting direction with respect to the throttle valve shaft prevents the couplers from projecting toward the throttle valve shaft. Furthermore, since the wiring couplers are arranged in the same front/rear direction, the routing, bundling the wires and the efficiency for connecting wires are improved.
Consequently, the achieved wiring configuration for the throttle body in the small vehicle can deal with the swings of the power unit, restrict the space used to route the wires and improve in the efficiency for connecting wires.

According to the invention of claim 2, in addition to the effect of the invention of claim 1, the wire from the first wiring coupler and the wire from the second wiring coupler are positioned close to each other, and the wires therefore can be easily bundled, thereby reducing the space used to route the wires.

According to the invention of claim 3, in addition to the effect of the invention of claim 2, the wires from the wiring couplers are arranged so as to swing in the front/rear direction of the vehicle together with the swings of the power unit of the traveling vehicle, which restricts swings in the width and up/down directions of the vehicle and therefore makes the wiring configuration for the throttle body compact, thereby easily meeting the width requirement of the vehicle and the height requirement of the seat.

According to the invention of claim 4, in addition to the effect of the invention of claim 3, the wires are protected by the cross member and the work space for wiring is increased.

According to the invention of claim 5, in addition to the effect of the invention of claim 4, wiring work around the internal combustion engine can be performed more efficiently.

The invention of claim 6, in addition to the effect of the invention of claim 4 or 5, allows the wires from the wiring couplers to be widely turned, which increases the amount which the internal combustion engine can swing and therefore improves the riding comfort on the vehicle.

According to the invention of claim 7, in addition to the effect of the invention of any of claims 4 to 6, the routing efficiency of the wires from the wiring coupler is secured and improved.

The invention of claim 8, in addition to the effect of the invention of claim 2, prevents the mutual interference between the attachment members of the opening sensor and actuator, and therefore allows the opening sensor and actuator to be close to each other, thereby making the throttle body and wiring configuration thereof compact.

The invention of claim 9, in addition to the effect of the invention of claim 1 or 8, makes the throttle body and cylinder head close to each other and compact and facilitates fastening and attaching the separately provided inlet manifold, thereby providing the cylinder head with the separate inlet manifold with excellent productivity.

The invention of claim 10, in addition to the effect of the invention of claim 9, can downsize the throttle body and position the throttle valve near the combustion chamber of the internal combustion engine. This can enhance the response of the internal combustion engine, resulting in a downsized internal combustion engine with improved performance.

### [Brief Description of Drawings]

Fig. 1 is a general illustration of a motorcycle with a power unit according to an embodiment of the present invention.
FIG. 2 is a left side view showing the power unit and relevant components principally related to an intake system around the power unit according to the embodiment.
FIG. 3 is a plan view showing the power unit and relevant components principally related to the intake system around the power unit according to the embodiment.
FIG. 4 (a) is a partially cutout plan view of an air cleaner case and connecting tube according to the embodiment, while FIG. 4(b) is a partially cutout left side view of the air cleaner case and connecting tube, viewed along arrow IVb in FIG. 4(a).
FIG. 5(a) is a front end view of the connecting tube viewed along arrow Va in FIG. 4(a), while FIG. 5(b) is a cross-sectional view of the connecting tube viewed along arrow Vb in FIG. 4(a).
FIG. 6 (a) is a left side view of a throttle body according to the embodiment, while FIG. 6(b) is a rear view of the throttle body viewed along arrow VIb in FIG. 6 (a) . Note that FIG. 6 (a) is viewed along arrow VIa in FIG. 6(b), and an area indicated by arrow VIc in FIG. 6(a) is a partial cross-section viewed along arrow VIc in FIG. 6(b).
FIG. 7(a) is a right side view of the throttle body according to the embodiment, while FIG. 7(b) is a front view of the throttle body viewed along arrow VIIb in FIG. 7 (a) . Note that FIG. 7 (a) is viewed along arrow VIIa in FIG. 7(b), and the area indicated by arrow VIIc in FIG. 7(b) is a partial cross-section viewed along arrow VIIc in FIG. 7 (a) .
FIG. 8(a) is a cross-sectional elevation view of the throttle body viewed along arrow VIIIa in FIG. 6, while FIG. 8(b) is a cross-sectional elevation view of the throttle body viewed along arrow VIIIb in FIG. 6.
FIG. 9 is a cross-sectional plan view, viewed along arrow IX in FIG. 6, showing the vicinity of a bypass valve upon start of the throttle body.
FIG. 10 is a left side view of a power unit and relevant components principally related to an intake system around the power unit according to a modification of the embodiment.
FIG. 11 is a plan view of the power unit and relevant components principally related to the intake system around the power unit according to the modification of the embodiment.

### [Description of Embodiment]

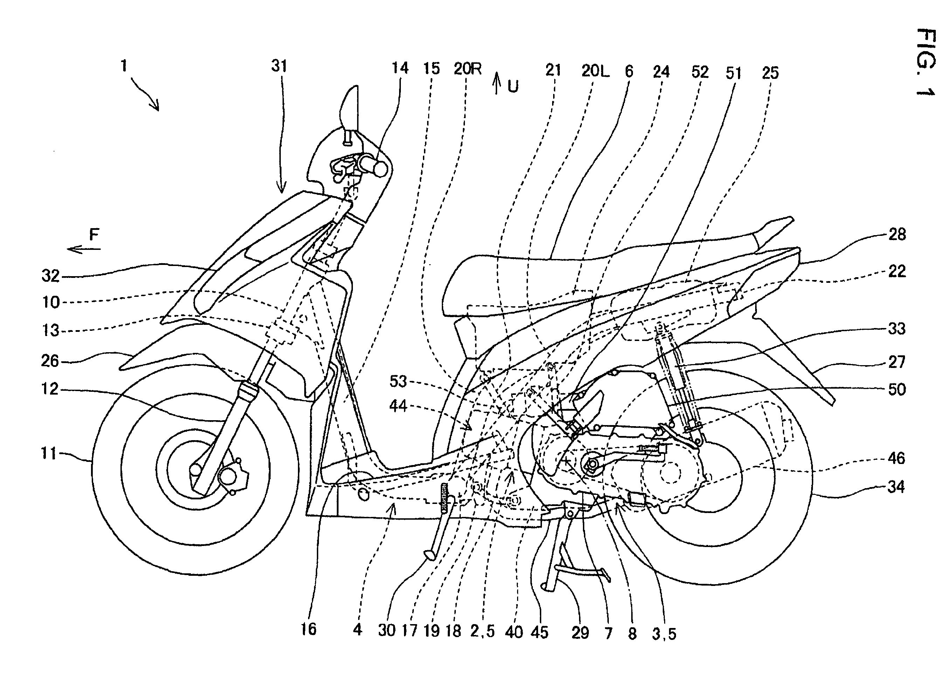

With reference to FIGS. 1 to 9, a wiring configuration for a throttle body in a small vehicle according to an embodiment of the present invention will be described below.
The front/rear, right/left and up/down directions mentioned in the description of this specification and claims conform to orientations of a vehicle, especially a small vehicle, such as a motorcycle, with a power unit of the embodiment. In the drawings, arrows F, L, R and U denote the forward direction, leftward direction, rightward direction and upward direction with respect to the vehicle, respectively.
In addition, in the drawings, outline arrows indicate the flow of intake air to an internal combustion engine, small arrows m indicate the flow of idle air, and small arrows n indicate the flow of bypass air at startup.

FIG. 1 depicts the left side of a motorcycle 1 as a vehicle in this embodiment. The motorcycle 1 has a power unit 5 including an internal combustion engine 2 and a power transmission system 3 for the rear wheel, the power unit 5 being swingably mounted on a body frame 4 and positioned below a seat 6. The internal combustion engine 2 is a 1-cylinder 4-stroke cycle internal combustion engine. The power unit 5 is mounted in the motorcycle 1 with a crankshaft 8, which is oriented along the width direction of the motorcycle 1, of a power unit case 7.

As shown in FIGS. 1 to 3, in the motorcycle 1 of the embodiment, a pair of right and left front forks 12 between which a front wheel 11 is journaled are supported by a head pipe 10 positioned at the front end of the body frame 4 so as to be steered through a steering stem 13. A steering handlebar 14 is attached to the top of the steering stem 13.

The body frame 4 is an underbone frame, with improved ease of striding over the frame, including a main frame 15 that obliquely extends downward to the rear from the head pipe 10 and a bottom part that is positioned between the main frame 15 and a seat 6 for an occupant. Disposed along the bottom part is a step floor 16 on which the feet of a rider sitting on the seat 6 are placed.

The main frame 15 has a rear end part joined to the middle of a cross frame 17 extending in the right/left direction at the lower middle part of the vehicle body in the front/rear direction. At the right and left ends of the cross frame 17, a pair of right and left pivot plates 19 are joined that swingably support the front part of the power unit 5 in the up/down direction with a suspension link 18.
The right and left ends of the cross frame 17 are also joined to the front ends of a pair of left rear frame 20L and right rear frame 20R, respectively.

The left and right rear frames 20L, 20R extend obliquely upward to the rear from the cross frame 17 and then are bent so as to reduce the degree of obliqueness. At a midpoint of the obliquely upwardly extending part, the left and right rear frames 20L, 20R are coupled/joined to each other with a cross member 21 curving upwardly toward the front of the vehicle body and are coupled/jointed to each other with a coupling member 22, placed horizontally along the width direction of the vehicle body, at the rear ends of the rear frames.

The left rear frame 20L is formed so as to be positioned lower than the right rear frame 20R at the position where the left and right rear frames 20L, 20R are coupled with the cross member 21. A left coupling portion 23L of the left rear frame 20L to which the cross member 21 is coupled is positioned lower than a right coupling portion 23R of the right rear frame 20R to which the cross member 21 is coupled.

Disposed above the left and right rear frames 20L, 20R, is a seat 6 having seating faces for a rider and pillion passenger in the front/rear direction.
Between the left and right rear frames 20L, 20R, a storage box 24 is provided under the front part of the seat 6, while a fuel tank 25 is provided under the rear part of the seat 6.

Reference numbers 26, 27, 28, 29 and 30 in FIG. 1 denote a front fender, a rear fender, a tail light, a main kickstand and a side kickstand, respectively.
The body frame 4 is enclosed with a body cover 31 made of a synthetic resin, and head lights 32 are mounted on the front part of the body cover 31.

The power unit 5 includes an internal combustion engine 2 on the front side thereof and the power transmission system 3 on the rear left side thereof as an integrated unit. A hanger 40 is provided in the lower front part of a power unit case 7.
With the hanger 40, the power unit 5 is supported, so as to swing in the up/down direction, by a pivot plate 19 through a suspension link 18. The rear left side of the power unit 5 is supported through a rear cushion 33 so as to move close to and away from the left and right rear frames 20L, 20R.
In addition, a rear wheel 34 is journaled at the rear end part of the power transmission mechanism 3 disposed on the rear side of the power unit case 7.

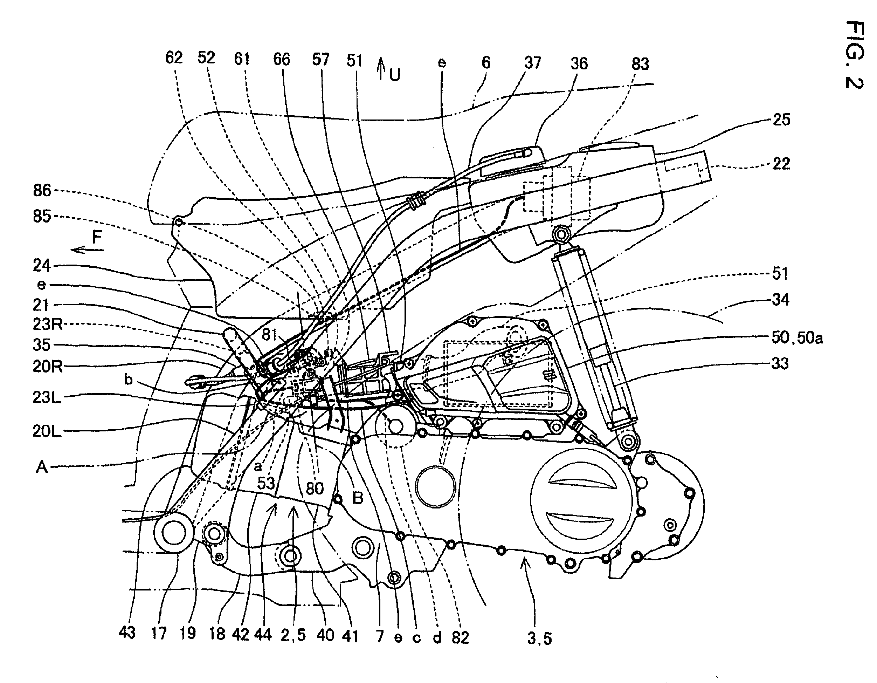

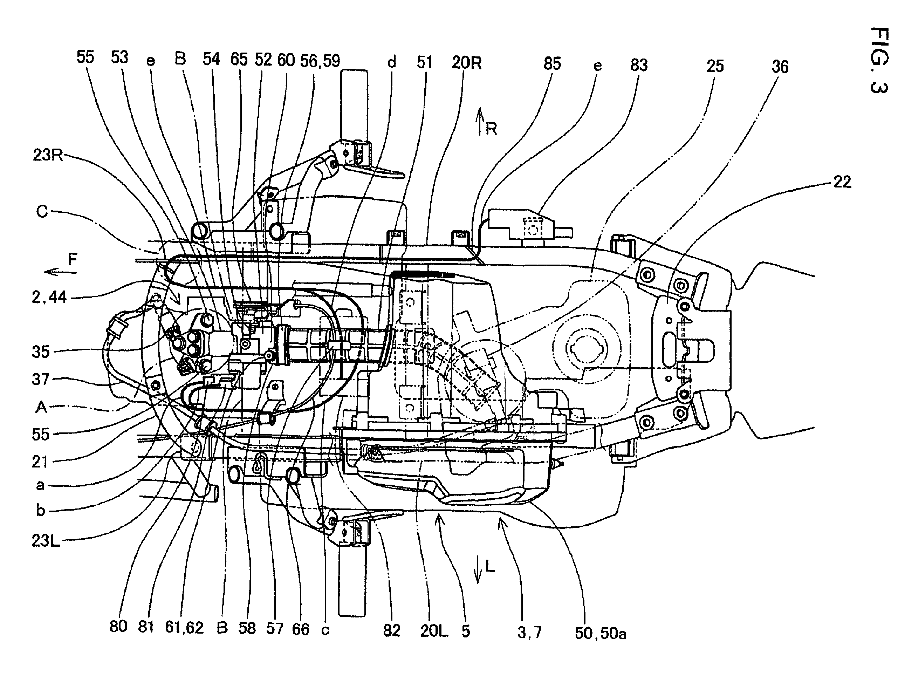

As shown in FIGS. 2 and 3, in front of the power unit case 7, a cylinder block 41, a cylinder head 42, a cylinder head cover 43 are engaged with each other, as if they are successively stacked almost horizontally, but tilt forward. The cylinder block 41, cylinder head 42, cylinder head cover 43 make up a cylinder unit 44 of the internal combustion engine 2.
Attached downwardly and slightly forwardly from the cylinder head 42 is an exhaust pipe 45 that extends rearward below the crank case and detours rightward to connect with a silencer 46 disposed on the right side of the vehicle body (see FIG. 1).

An air cleaner 50 is supported at a position on the left side of the rear wheel 34, above the power transmission mechanism 3 and away from the cylinder unit 44 of the internal combustion engine 2. A throttle body 52 is disposed near the cylinder unit 44. The air cleaner 50 and throttle body 52 are connected to each other with a connecting tube 51.
The throttle body 52 is positioned immediately above the hanger 40, which is provided under the power unit 5 in order to hold the power unit 5 on the body frame 4, and above the power unit 5.

The downstream side of the throttle body 52 is fastened to the upstream side of an inlet manifold 53 with a bolt 54, while the downstream side of the inlet manifold 53 is attached and fastened to the cylinder head 42 with a bolt 55 so that the inlet manifold 53 leads to an intake port, not shown in the drawings, provided in the cylinder head 42.

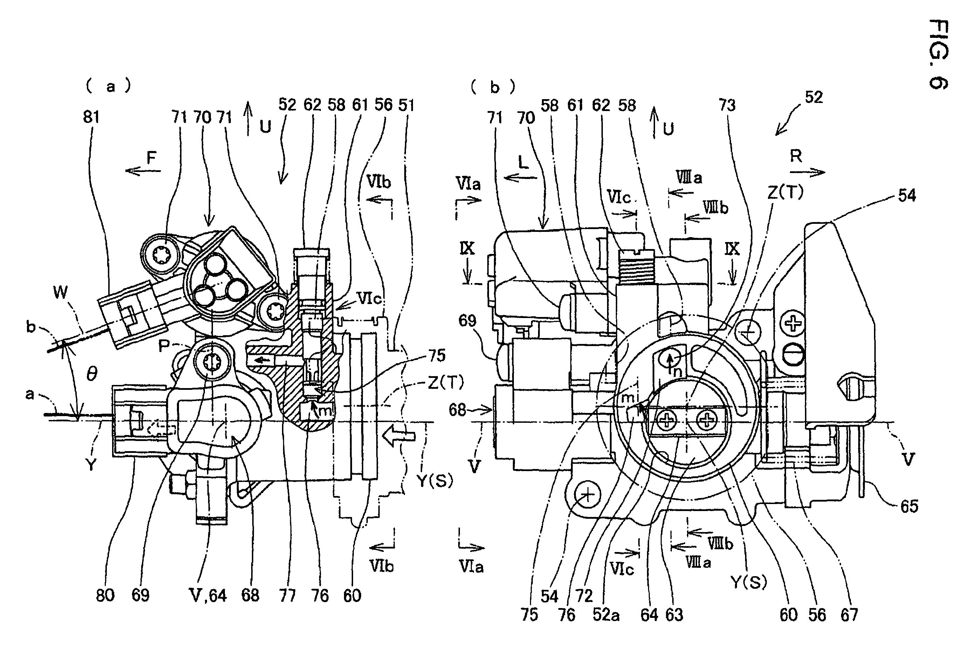

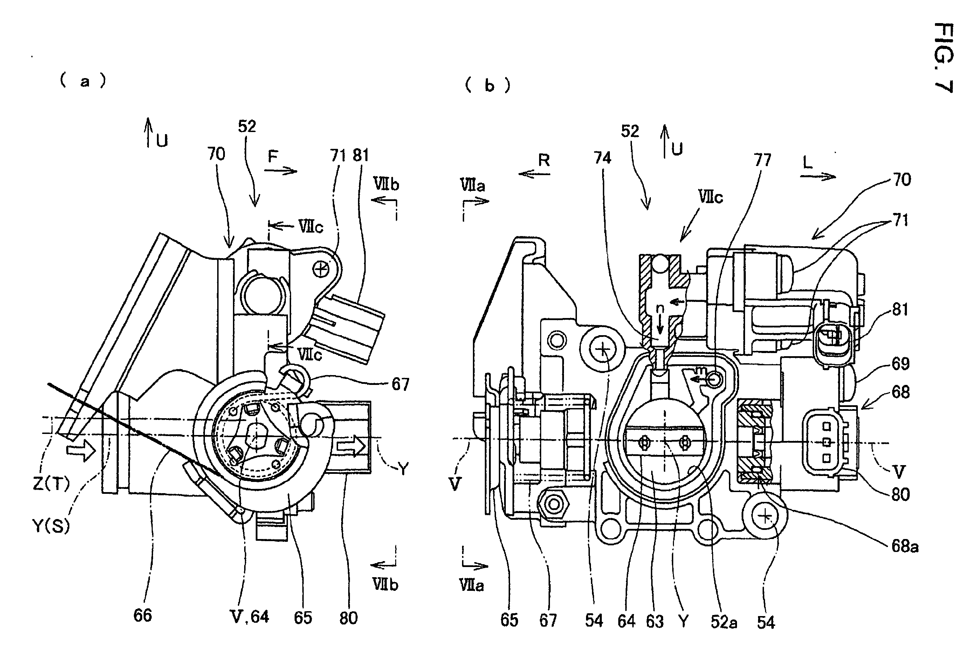

Specifically, the inlet manifold 53 is attached to the cylinder unit 44 with the bolt 55 so as to restrict the rotation about the axis of the intake path. The throttle body 52 is fastened to the inlet manifold 53 with the bolt 54 so as to restrict the rotation about the Y-axis of an intake path 52a (see FIGS. 6 and 7), and the throttle body 52 therefore is assembled with and supported by the cylinder unit 44 through the inlet manifold 53 in an integral manner with the bolt 55 which is a restriction member for restricting the rotation about the Y-axis of the intake path 52a.

The air cleaner 50 cleans air that in turn is sent into the cylinder head 42 of the internal combustion engine 2 via the intake paths of the connecting tube 51, throttle body 52, and inlet manifold 53.
The upper part of the inlet manifold 53 fits with the lower part of a fuel injection system 35 that injects fuel toward an intake port, not shown. A fuel line 37 having one end connected to a fuel pump 36 of a fuel tank 25 has the other end connected to the fuel injection system 35, thereby supplying fuel from the fuel tank 25 into the cylinder head 42 through the fuel injection system 35.

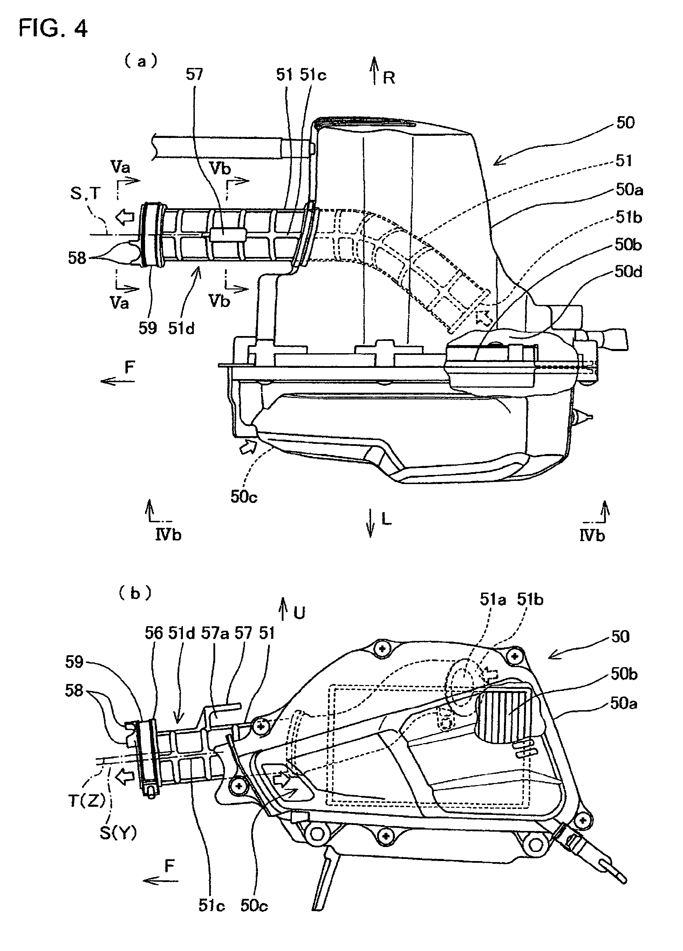

As shown in FIG. 4, the air cleaner 50 is made up with an air cleaner case 50a and a cleaner element 50b in the case 50a. The air cleaner case 50a is internally divided by arranging the cleaner element 50b in the shape of a flat plate whose surfaces face rightward and leftward. An inlet port 50c for sucking in outside-air is provided on the left side of the cleaner element 50b, while a cleaner chamber 50d is provided on the right side. The cleaner chamber 50d is connected to a connecting tube 51 by inserting an entrance port 51b of a tube-side intake path 51a.

Since the connecting tube 51 is a circular cross-section cylinder made of rubber or resin with strengthening ribs 51c on its outer surface, it is resistant to vibration, displacement and heat produced between connected components.
While the upstream end of the connecting tube 51 is provided with an entrance port 51b inserted into the cleaner chamber 50d, the downstream end of the connecting tube 51 is provided with a tube-side connection cylindrical portion 56 for connecting to the throttle body 52 on the downstream side.
In addition, the connecting tube 51 includes a straight portion 51d of a predetermined length from the tube-side connection cylindrical portion 56 toward the upstream side.

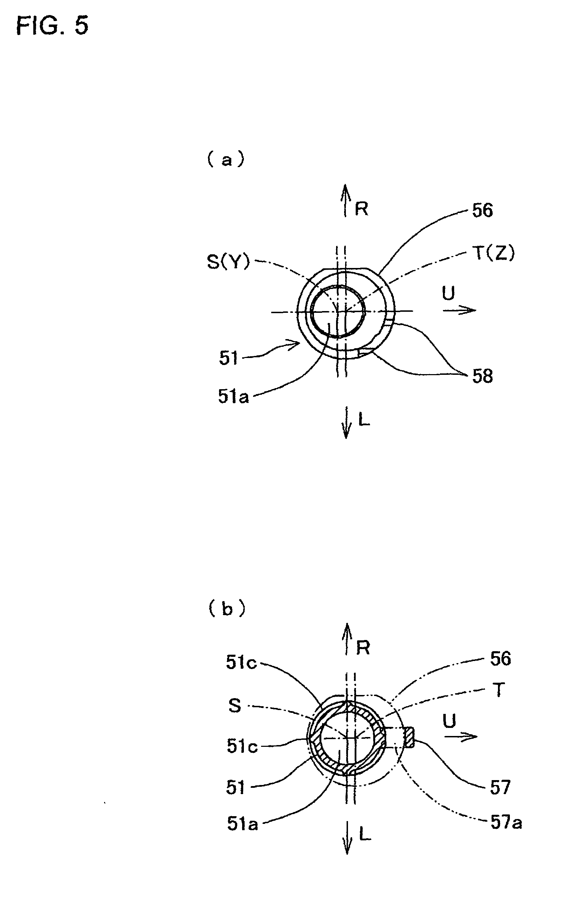

As shown in FIG. 5(a), the T-axis of the tube-side connection cylindrical portion 56 is eccentric in one direction (upward, in the U direction in FIG. 5(a)) with respect to the S-axis of the tube-side intake path 51a in the connecting tube 51.
The tube-side connection cylindrical portion 56 is provided with an engagement portion 58 (also see FIG. 4) on the side to which the tube-side connection cylindrical portion 56 deviates from the S-axis of the tube-side intake path 51a. The engagement portion 58 includes two projections toward the throttle body 52 in the direction of the S-axis and T-axis.

Furthermore, as shown in FIG. 5(b), a cable guiding portion 57 is formed on the outer surface of the straight portion 51d so as to project from the side to which the tube-side connection cylindrical portion 56 deviates from the S-axis of the tube-side intake path 51a. The cable guiding portion 57 has a recessed portion 57a engaged with a cable (also see FIG. 4). It is especially effective if the cable to be engaged with the cable guiding portion 57 is a throttle cable 66 as will be described later; however, other various cables (including tubes) for engine power, electricity, fluid can be used, because the cable guiding portion 57 allows the cables to be placed low on the connecting tube 51 and makes it easy to secure a space for guiding the cables.

As shown in FIG. 6, the throttle body 52 is provided with a connection cylindrical portion 60 connected with the connecting tube 51. The connection cylindrical portion 60 is formed so that the Z-axis of the connection cylindrical portion 60 is eccentric in one direction (upward, in the U direction in FIG. 6) with respect to the Y-axis of the intake path 52a in the throttle body 52.
The connection cylindrical portion 60 is provided with a positioning portion 61 that determines the position of the connecting tube 51 in the rotational direction about the T-axis of the tube-side connection cylindrical portion 56.

The positioning portion 61 is disposed on the connection cylindrical portion 60 of the throttle body 52 and at a position with which the engagement portion 58 provided on the tube-side connection cylindrical portion 56 of the connecting tube 51 engages. In the embodiment, the positioning portion 61 is a boss 61 for an idle air screw 62 provided on the throttle body 52.
The positioning portion 61, as shown in FIG. 6(b), is positioned so as to deviate to one side (on the left side or L side in FIG. 6), viewed in the up/down direction, with respect to the Y-axis of the intake path 52a of the throttle body 52.

When such a connecting tube 51 is connected to the throttle body 52, the end of the connection cylindrical portion 60 of the throttle body 52 is inserted into the tube-side connection cylindrical portion 56 and the T-axis of the tube-side connection cylindrical portion 56 agrees with the Z-axis of the connection cylindrical portion 60.
In addition, the two projections of the engagement portion 58 of the tube-side connection cylindrical portion 56 engage with the positioning portion 61 of the connection cylindrical portion 60 as if they sandwich it, thereby positioning the tube-side connection cylindrical portion 56 in the rotational direction about the T-axis.

Consequently, the position of the connecting tube 51 in the rotational direction is determined, and the S-axis of the tube-side intake path 51a and the Y-axis of the intake path 52a of the throttle body 52 agree with each other, bringing the intake paths 51a into communication with the intake path 52a as has been predetermined.
In the predetermined connection state as described above, the outer surface of the tube-side connection cylindrical portion 56 in which the end part of the connection cylindrical portion 60 of the throttle body 52 is inserted is fastened with a fixing band 59 (see FIG. 4).

Since the throttle body 52 is assembled to and integrally supported by the cylinder unit 44 through the inlet manifold 53 with the bolt 54, which is a restriction member for restricting the rotation of the intake path 52a about the Y-axis, so that the position of the throttle body 52 in the rotational direction about the Y-axis is restricted as described above, the position of the connecting tube 51 in the rotational direction about the S-axis with respect to the power unit 2 is also restricted.

As shown in FIGS. 6 and 7, disposed in the intake path 52a of the throttle body 52 is a butterfly throttle valve 63 for opening/closing the intake path 52a. The throttle valve 63 is supported by a throttle valve shaft 64 whose V-axis is oriented along the width direction of the vehicle body. The throttle valve shaft 64 horizontally crosses the intake path 52a and is rotatably bore on both right and left walls of the throttle body 52.

A throttle drum 65 is secured to the end of the throttle valve shaft 64 projecting from the right side of the throttle body 52 (in the R direction in FIG. 7). The throttle drum 65 is connected with a throttle cable 66 and a return spring 67 biasing the throttle valve 63 in the direction in which the throttle valve is closed. Pulling the throttle cable 66 by a throttle operation member, not shown, opens the throttle valve 63.

As shown in FIGS. 2 and 3, the throttle cable 66 routed backward from the throttle drum 65 is hooked around the recessed portion 57a of the cable guiding portion 57 on the connecting tube 51 and turned in a U shape to be routed forward of the motorcycle 1.
Note that the throttle cable 66 to be disposed is inserted through a throttle cable tube.

On the outer wall of the throttle body 52 through which the other end of the throttle valve shaft 64 projects (left side, an end in the L direction in FIG. 7), a throttle opening sensor 68, which is formed separately from the throttle body 52, is attached.
The throttle opening sensor 68 detecting the degree of throttle opening is attached to the throttle body 52 from the left side with a sensor attachment bolt 69 in the direction of the V-axis of the throttle valve shaft 64 so that a detector 68a of the throttle opening sensor 68 fits into the throttle body 52 along the V-axis of the throttle valve shaft 64.

Furthermore, a starting-air control valve 70, which is formed separately from the throttle body 52, is attached to the throttle body 52, above the throttle opening sensor 68. The starting-air control valve 70 serves as an actuator for controlling the throttle body 52.
The starting-air control valve 70 is attached to the throttle body 52 in the vicinity of the throttle opening sensor 68 with two valve attachment bolts 71 that are aligned with each other in the front/rear direction of the vehicle body and inserted from the same direction.

The starting-air control valve 70 is a solenoid valve and controls air for combustion (starting bypass air) that bypasses the throttle valve 63 to be supplied more than the opening degree of the throttle valve 63 upon startup of the internal combustion engine 2.

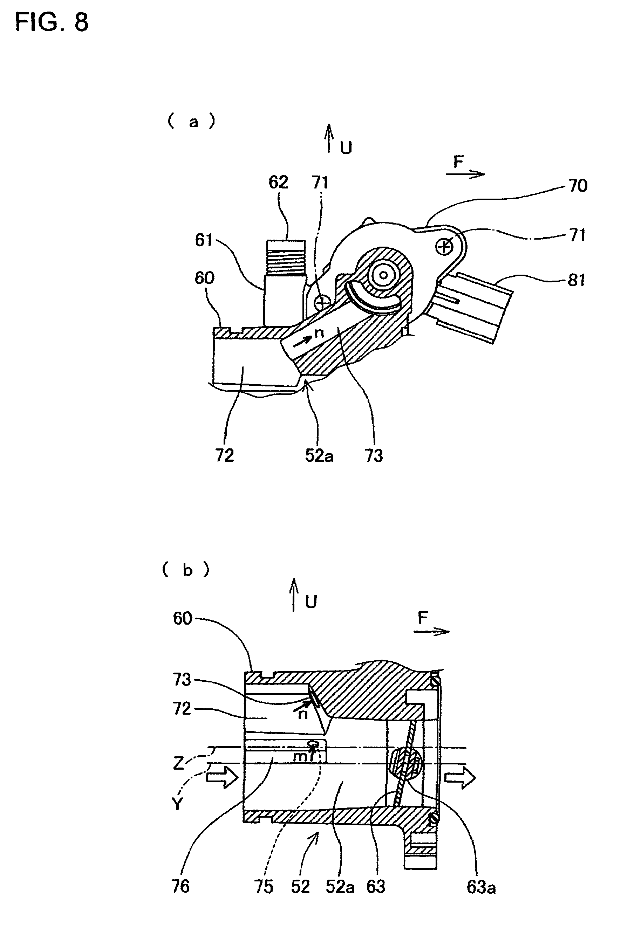

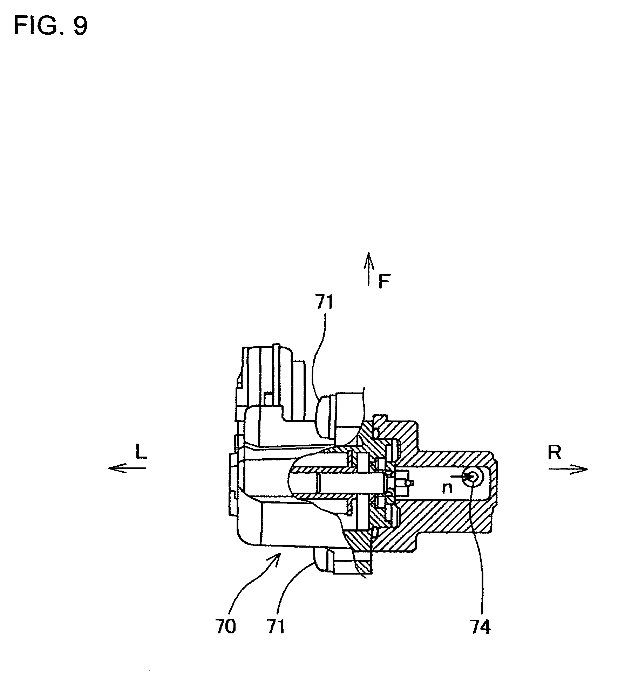

As shown in FIGS. 6(b) and 8, the starting bypass air comes from the upstream side of the throttle valve 63 in the throttle body 52, namely from a bypass air groove 72 bulgingly formed in the intake path 52a of the connection cylindrical portion 60, passes through a bypass-air intake hole 73 and enters the starting-air control valve 70 as shown by small arrows n.
The starting bypass air controlled by the starting-air control valve 70 passes through a bypass-air supply hole 74 as shown by small arrow n in FIG. 9 and is supplied into the intake path 52a on the downstream side of the throttle valve 63 (on the side of the inlet manifold 53) as shown in FIG. 7 (b) .

The positioning portion 61 that is engaged with the engagement portion 58 of the connecting tube 51 is a boss 61 in which the idle air screw 62 is threadably mounted.
An idle-air adjustment valve 75 including the idle air screw 62 is to set the amount of air for combustion (idle air) that is necessary to be supplied even if the throttle valve 63 is closed during idle time of the internal combustion engine 2.

As shown in FIGS. 6 and 8(b), the idle air comes from the upstream side of the throttle valve 63 of the throttle body 52, namely from the idle air groove 76 bulgingly formed in the intake path 52a of the connection cylindrical portion 60, enters the idle-air adjustment valve 75, as shown by the small arrows m, and passes through the idle-air adjustment valve 75 in accordance with the valve opening degree set by how much the idle air screw 62 is screwed in. The idle air adjusted by the idle-air adjustment valve 75 passes through an idle air supply hole 77 as shown by small arrows m and is supplied into the intake path 52a on the downstream side of the throttle valve 63 (on the side of the inlet manifold 53) as shown in FIG. 7 (b) .
Although the supply of the idle air is preset according to the characteristics and use conditions of individual vehicles, it can be readjusted by the idle air screw 62.

As shown in FIG. 2, an inspection window 86 used for conveniently checking the idle air screw 62 is provided at the bottom of the storage box 24 disposed above the throttle body 52 and connecting tube 51. The inspection window 86 is usually covered with a lid 87 made of rubber, resin or other materials.

As shown in FIG. 6(a), the throttle opening sensor 68 and starting-air control valve 70 are aligned in the up/down direction and attached to the throttle body 52. The two valve attachment bolts 71 of the starting-air control valve 70 are disposed in the front/rear direction of the vehicle body. The sensor attachment bolt 69 of the throttle opening sensor 68 is disposed on vertical line P extending between the two valve attachment bolts 71.
The sensor attachment bolt 69 and valve attachment bolt 71 therefore do not interfere with each other.

A first wiring coupler 80 connecting the throttle opening sensor 68 to an external component and a second wiring coupler 81 connecting the starting-air control valve 70 to the external component individually face forward and are disposed so that the first and second wiring couplers 80, 81 intersect with respect to the V-axis of the throttle valve shaft 64.
The first wiring coupler 80 attached to the throttle opening sensor 68 on the throttle valve shaft 64 is positioned at approximately the same level as the Y-axis of the intake path 52a in the up/down direction and faces in the same direction, while the second wiring coupler 81 of the starting-air control valve 70 is disposed away from the intake path 52a of the throttle body 52.

The second wiring coupler 81 is inclined so that the W-axis of the second wiring coupler 81 forms an acute angle θ with the Y-axis of the intake path 52a to be near to the intake path 52a, and consequently a wire b from the second wiring coupler 81 runs in approximately the same direction as a wire a from the first wiring coupler 80, but approaches the wire a. This makes it easy for the wires a and b to be bundled together (see FIGS. 2 and 3).

As shown in FIGS. 2 and 3, the body frame 4 of the motorcycle 1 includes a pair of left and right rear frames 20L, 20R and a cross member 21 attached between the left and right rear frames 20L, 20R. The cross member 21 is disposed in front of the first and second wiring couplers 80, 81. The wires a and b are directed from the first and second wiring couplers 80, 81 to an area surrounded by the cross member 21, left and right rear frames 20L, 20R and the upper surface of the power unit 5.

The wires a and b are turned, in the area, leftward toward the rear of the vehicle body and bundled into a harness or a bundled wire c.
Although FIGS. 2 and 3 show that the wires a and b from the first and second wiring couplers 80, 81 are immediately turned rearward in the space, the wires a and b can be curved widely in the space so as to run along and be supported by the cross member 21, and then runs rearward.
Since the cross member 21 that is curved upwardly toward the front of the vehicle body permits the wires a and b from the first and second wiring couplers 80, 81 to curve gently, the amount which the internal combustion engine 2 can swing can be increased.

The wire c is turned to the right to run across the width of the vehicle body in front of the rear wheel 34 and turns again in a U-shape toward the front, and then the wire c is bundled with a wire d of a starter motor 82 disposed on the upper surface of the power unit 5 into a harness, or a bundled wire e that in turn runs forward on the right side of the power unit 5.

The wire e is turned backward around a right coupling portion 23R between the cross member 21 and right rear frame 20R (area C in FIG. 3), appropriately held by a harness clamp 85 along the right rear frame 20R, and extended and connected to a control unit (programmed fuel injection control unit) 83 attached to the rear part of the right rear frame 20R.
Since the wire e is routed in a large U shape in the areas before and after the turning area C of the wires near the right coupling portion 23R, there is a plenty of deflection allowance between the swinging power unit 5 and body frame 4.

In addition, the cross member 21, which curves upwardly toward the front of the vehicle body, and the left rear frame 20L positioned lower than the right rear frame 20R so that the cross member 21 is positioned close to the first and second wiring couplers 80, 81 facilitate routing of the wires a and b from the first and second wiring couplers 80, 81.

In addition, the inlet manifold 53 is independently provided on the cylinder head 42 of the internal combustion engine 2 and fastened on the cylinder head 42 with the bolt 55. An area A in which an attachment tool for attaching the inlet manifold 53 to the cylinder head 42 is inserted overlaps the first and second wiring couplers 80, 81 when viewed in the width direction of the vehicle body (see FIG. 2), and is positioned nearer the center of the vehicle body than the first and second wiring couplers 80, 81 when viewed in the up/down direction (see FIG. 3), thereby facilitating fastening and attaching the inlet manifold.

The throttle body 52 is fastened and attached on the inlet manifold 53 with the bolt 54. The wires a and b of the first and second wiring couplers 80, 81 are joined nearer the inlet manifold 53 side than a mating surface B between the inlet manifold 53 and throttle body 52 (see FIGS. 2 and 3), thereby bringing the throttle valve 63 near a combustion chamber of the internal combustion engine 2.

The above-described embodiment produces the following effects.
Specifically, the positioning portion 61 for positioning the connecting tube 51 in the rotational direction is provided on the connection cylindrical portion 60 of the throttle body 52 whose position in the rotational direction is restricted with respect to the cylinder unit 44 of the internal combustion engine 2, thereby reducing variations in the positions of the connecting tube 51 in the rotational direction and distortion in the shape of the connecting tube caused by the variations.

Providing the positioning portion 61 at a position, in the throttle body 52, where the engagement portion 58 formed on the tube-side connection cylindrical portion 56 of the connecting tube 51 engages, enables simultaneous operations of connecting the connecting tube 51 to the throttle valve 52 and positioning the connecting tube 51 in the rotational direction, thereby improving the working efficiency.

Providing the positioning portion 61 on the throttle body 52 as a boss for the idle air screw 62 and doubling the boss as the positioning portion 61 can prevent the throttle body 52 from upsizing.
In addition, since the positioning portion 61 is positioned so as to deviate to one side with respect to the Y-axis of the intake path 52a when viewed in the up/down direction, the projecting part of the positioning portion 61 in the height direction can be reduced, thereby preventing the throttle body 52 from upsizing.

The connection cylindrical portion 60, connecting to the connecting tube 51, of the throttle body 52 is formed so as to be eccentric in one direction with respect to the Y-axis of the intake path 52a, and the tube-side connection cylindrical portion 56 of the connecting tube 51 is formed so as to be eccentric in one direction with respect to the S-axis of the tube-side intake path 51a in the connecting tube 51, just as in the case of the throttle body 52. Even if the connection cylindrical portion 60 of the throttle body 52 is formed eccentric with respect to the intake path 52a and the tube-side connection cylindrical portion 56 is formed eccentric with respect to the tube-side intake path 51a, positioning of the connecting tube 51 in the rotational direction eliminates the deviations between the Y- and S-axes of both the intake paths 52a and 51a, thereby making smooth connection between the throttle body 52 and connecting tube 51 and stabilizing the performance of the internal combustion engine 2.

The straight portion 51d, which has a predetermined length and is provided in the connecting tube 51 from the tube-side connection cylindrical portion 56 toward the upstream side, improves holding stability during the connection operations, thereby improving working efficiency and preventing misalignment in the rotational direction.

The cable guiding portion 57, which is formed so as to project from the outer surface of the straight portion 51d, positioned on the side to which the tube-side connection cylindrical portion 56 is deviated with respect to the S-axis of the tube-side intake path 51a and provided with a recessed portion 57a with which the cable is hooked, facilitates securing a space used to guide cables, thereby providing the improved layout of the cables in the motorcycle 1.
In addition, since the cable is a throttle cable 66 and the cable runs from the throttle drum 65 attached to the right end of the throttle valve shaft 64, the right end projecting out of the throttle body 52 and the throttle valve shaft 64 being aligned along the width direction of the vehicle body, and is then turned backward in a U shape on the connecting tube 51 to run toward the front of the motorcycle 2, the throttle cable 66 can be arranged low and the seat 6 therefore can be lowered.

The storage box 24 of the motorcycle 1 is disposed above the throttle body 52 and connecting tube 51, and the inspection window 86 for the idle air screw 62 is provided at the bottom of the storage box 24. Even if the large storage box 24 is placed on the upper part of the throttle body 52 and connecting tube 51, inspection of the idle air screw 62 can be performed without detaching the storage box 24, resulting in improvement of the working efficiency.

In the motorcycle 1 provided with the power unit 5 below the seat 6, that includes the internal combustion engine 2 and power transmission system 3 for the rear wheel 34 and is swingably attached to the body frame 4, the throttle body 52 controlling the amount of intake air of the internal combustion engine 2 is provided between the power unit 5 and seat 6, the throttle opening sensor 68 detecting the degree of throttle opening is provided at the end of the throttle valve shaft 64 disposed in the throttle body 52 so as to align along the width direction of the vehicle body, the starting-air control valve 70 serving as an actuator controlling the throttle body 52 is attached to the throttle body 52 from the same direction as and in the proximity of the throttle opening sensor 68, the first wiring coupler 80 connecting the throttle opening sensor 68 to an external component and the second wiring coupler 81 connecting the starting-air control valve 70 to the external component are disposed separately in the same front/rear direction so as to intersect with respect to the throttle valve shaft 64. The unidirectional arrangement of the plurality of independent sensor and actuator, namely the throttle opening sensor 68 and the throttle opening sensor 68 improves assembling efficiency of the throttle body 52.
In addition, the arrangement of the first and second wiring couplers 80, 81 in the intersecting direction with respect to the throttle valve shaft 64 for installing the wires prevents the couplers from projecting toward the throttle valve shaft 64. Furthermore, since the first and second wiring couplers 80, 81 are arranged in the same front/rear direction, the routing, bundling and connecting operability of the wires a and b are improved.

Since the throttle opening sensor 68 and starting-air control valve 70 are aligned in the up/down direction on the throttle body 52, and the second wiring coupler 81 attached to the starting-air control valve 70 placed away from the intake path 52a of the throttle body 52 is inclined at an acute angle θ so as to approach the intake path 52a, the wire a from the first wiring coupler 80 can be closer to the wire b from the second wiring coupler 81, thereby facilitating the bundling of the wires a and b and reducing the space used to route the wires a and b.

The motorcycle 1 is provided with the hanger 40, which is placed at the bottom of the power unit 5 and holds the power unit 5 on the body frame 4, and the throttle body 52, which is placed immediately above the hanger 40 and higher than the power unit 5, and therefore the wire parts a and b from the first and second wiring couplers 80, 81 are disposed so as to swing in the front/rear direction of the motorcycle 1 with swings of the power unit 5 caused by traveling motion of the motorcycle 1. This curbs swings in the width and up/down directions and makes the wiring configuration for the throttle body 52 compact, and therefore makes it easy to meet the width requirement of the motorcycle 1 and the height requirement of the seat 6.

Since the body frame 4 of the motorcycle 1 includes the left and right rear frames 20L, 20R and the cross member 21 attached therebetween, the cross member 21 is arranged in front of the first and second wiring couplers 80, 81, and the wires a and b from the first and second wiring couplers 80, 81 are guided into an area surrounded by the cross member 21, left and right rear frames 20L, 20R and the upper surface of the power unit 5, the wires a and b are protected by the cross member 21 and the space used for wiring operations is increased.

After turning in the area backward to the rear of the motorcycle 1, the wires a and b, or the bundled wire c, are turned in a U shape so as to cross the vehicle body in the width direction in front of the rear wheel 34, and turned again forward to be coupled with the wire d of the starter motor 82 disposed on the power unit 5, thereby efficiently performing wiring operations around the internal combustion engine 2.

1 The cross member 21 curved upwardly to project to the front of the motorcycle 1 allows the wires a and b from the first and second wiring couplers 80, 81 to widely curve, thereby increasing the amount which the internal combustion engine 2 can swing and therefore improving the riding comfort on the motorcycle 1.

Since one of the left and right rear frames 20L, 20R is positioned differently in the up/down direction with respect to the other in order for the cross member 21 to be close to the first and second wiring couplers 80, 81, the routing of the wires a and b from the first and second wiring couplers 80, 81 is secured and improved.

Either one of the throttle opening sensor 68 and starting-air control valve 70, in this embodiment, the starting-air control valve 70 has two valve attachment bolts 71 that are attachment members aligned in the front/rear direction of the motorcycle 1, while the other of the throttle opening sensor 68 and starting-air control valve 70, in this embodiment, the throttle opening sensor 68 has a sensor attachment bolt 69 that is positioned on the line P in the up/down direction between the valve attachment bolts 71. The attachment members of the throttle opening sensor 68 and starting-air control valve 70 are prevented from interfering with each other, and therefore the throttle opening sensor 68 and starting-air control valve 70 can be placed closer to each other, thereby downsizing the throttle body 52 and wiring configuration.

Since the throttle body 52 is held by the inlet manifold 53, which is independently provided with respect to the cylinder head 42 of the internal combustion engine 2, and the area A into which an attachment tool for attaching the inlet manifold 53 to the cylinder head 42 is inserted overlaps with the first and second wiring couplers 80, 81 when viewed in the up/down direction and is positioned nearer the center of the vehicle than the first and second wiring couplers 80, 81 when viewed in the up/down direction, the throttle body 52 and cylinder head 42 can be placed close to each other to be compact, while the inlet manifold 53, Which is a separate component, can be easily fastened and attached, thereby improving the productivity of the cylinder head 42 with the separate inlet manifold 53.

Since the wires a and b of the first and second couplers 80, 81 are joined nearer to the inlet manifold 53 side than the mating surface B between the inlet manifold 53 and throttle body 52, the throttle body 52 can be downsized more and the throttle valve 63 can be placed nearer to the combustion chamber of the internal combustion engine, thereby enhancing the response of the internal combustion engine 2 and downsizing and improving the performance of the internal combustion engine.

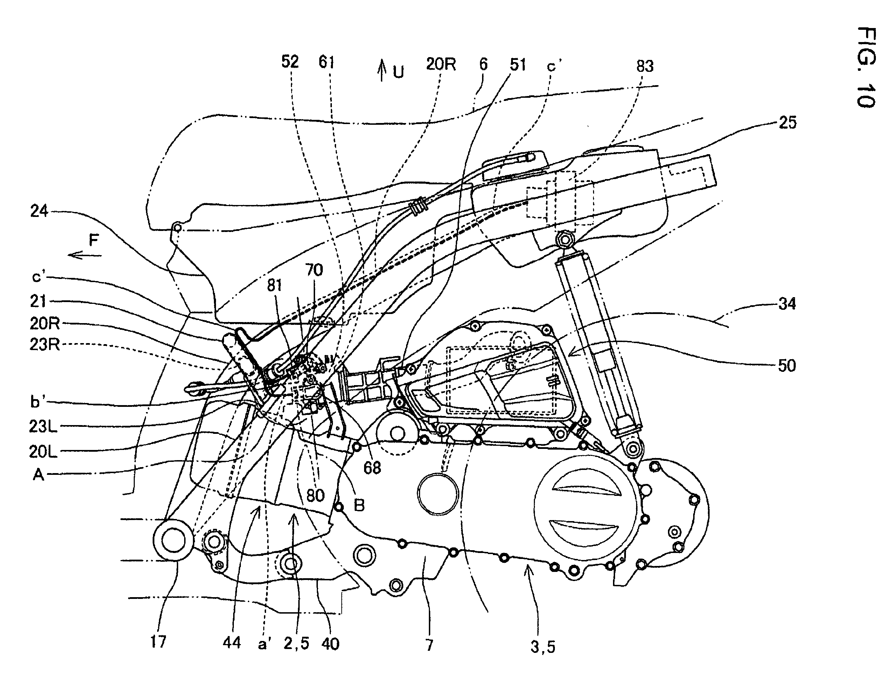

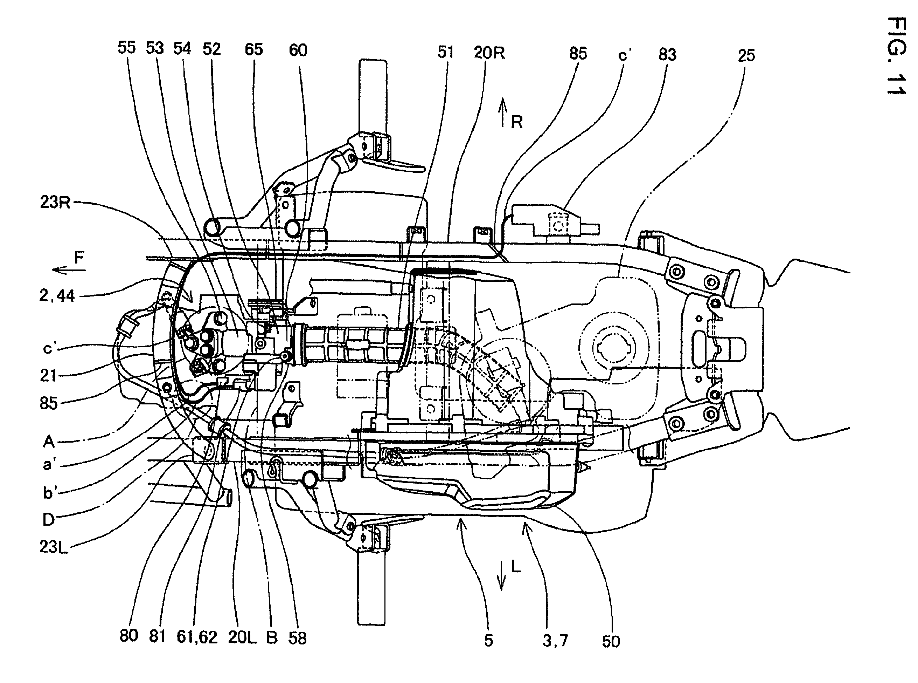

Although the embodiment of the present invention has been described, the embodiment can be of course partially modified within the range of the scope of the invention.
As an example, a modification in which wires from the first and second couplers 80, 81 are differently laid out will be briefly described below with reference to FIGS. 10 and 11.
The modification is identical to the above-described embodiment except for the wire layout, and therefore like components are denoted by like numerals as of the embodiment or omitted in FIGS. 10 and 11 and only the different matters will be explained.

As shown in FIGS. 10 and 11, the wires a' and b' from the first and second couplers 80, 81 are guided to an area surrounded by the cross member 21 disposed in front of the first and second couplers 80, 81, the left and right rear frames 20L, 20R, and the upper surface of the power unit 5, and once turned leftward in the vicinity of the cross member 21 (area D in FIG. 3), turned rearward in a U shape, held along the cross member 21 and bundled into a harness, or a bundled wire c'.
Since the cross member 21 is curved so as to upwardly project to the front of the vehicle body, while the left rear frame 20L is positioned lower than the right rear frame 20R so that the cross member 21 is positioned close to the first and second wiring couplers 80, 81, routing the wires a' and b' from the first and second wiring couplers 80, 81 in the modification can be made with particular ease.
In addition to plenty of deflection allowance in the area D, the cross member 21, curved so as to upwardly project to the front of the vehicle body, allows the wires a' and b' from the first and second wiring couplers 80, 81 and the bundled wire c' to widely curve, thereby increasing the amount which the internal combustion engine 2 can swing.

The wire c' is appropriately held on the right rear frame 20R by harness clamps 85 from the vicinity of the right coupling portion 23R provided between the cross member 21 and right rear frame 20R, and is extended and connected to the control unit (programmed fuel injection control unit) 83 attached to the rear part of the right rear frame 20R. In the modification, holding the wires a', b' and c' on the cross member 21 can define the swingable range of the wires and reduce the wiring space.

Although the motorcycle 1 is used as a vehicle, especially as a small vehicle in the above-described embodiment and the modification thereof, the present invention can be applied to different forms of vehicles, such as three-wheeled and four-wheeled buggies, as long as they use the power unit 5, throttle body 52 and some other components.

In the present invention, the "opening sensor" in "the first wiring coupler connecting the opening sensor to an external component" denotes the throttle opening sensor 68 in the embodiment; however, the "first wiring coupler" can be configured to make connection between a sensor of other types, such as a temperature sensor and pressure sensor, to the external component to transmit detection signals or the like. In addition, the "first wiring coupler" can be configured to receive control signals from an external component as well.
In the present invention, the "actuator" in "the second wiring coupler connecting the actuator to the external component" denotes the starting-air control valve 70 in the embodiment; however, the "second wiring coupler" can be configured to make connection between other various types of actuators and the external component to transmit control signals. In addition the "second wiring coupler" can be configured to receive detection signals from a sensor of some kind as well.
The present invention is directed to " a small vehicle having a wiring configuration for a throttle body" including a separately provided first wiring coupler and second wiring coupler and the other elements recited in the scope of claims and it is to be understood that various forms within the scope of the invention may be made.

### [Reference Signs List]

- 1:: motorcycle (small vehicle),
- 2:: internal combustion engine,
- 3:: power transmission system,
- 4:: body frame,
- 5:: power unit,
- 6:: seat,
- 7:: power unit case,
- 8:: crankshaft,
- 15:: main frame,
- 17:: cross frame,
- 18:: suspension link,
- 19:: pivot plate,
- 20L:: left rear frame (one of a pair of rear frames),

- 20R:: right rear frame (one of the pair of rear frames),
- 21:: cross member,
- 24:: storage box,
- 25:: fuel tank,
- 34:: rear wheel,
- 40:: hanger,
- 42:: cylinder head,
- 44:: cylinder unit,
- 50:: air cleaner,
- 51:: connecting tube,
- 52:: throttle body,
- 52a:: intake path,
- 53:: inlet manifold,
- 63:: throttle valve,
- 64:: throttle valve shaft,
- 68:: throttle opening sensor (opening sensor),
- 69:: sensor attachment bolt (one of attachment members),
- 70:: starting-air control valve (actuator),
- 71:: valve attachment bolt (the other attachment member),
- 80:: first wiring coupler (first wiring coupler),
- 81:: second wiring coupler (second wiring coupler),

- 82:: starter motor,
- 83:: control unit (programmed fuel injection control unit),
- a to e:: wire,
- a' to c':: wire

## Claims

1. A small vehicle provided with a power unit (5) and a wiring configuration for a throttle body in said small vehicle (1), said power unit (5) including integratedly an internal combustion engine (2) and a power transmission system (3) for a rear wheel (34), the power unit (5) being swingably mounted on a body frame (4) and disposed below a seat (6), the wiring configuration comprising:
a throttle body (52) that controls the amount of air-intake of the internal combustion engine (2) and is disposed between the power unit (5) and the seat (6); and **characterized in that** said wiring configuration further comprises:
an opening sensor (68) that detects the degree of throttle opening and is provided at an end of a throttle valve shaft (64) of the throttle body (52), the throttle valve shaft (64) being aligned along the width direction of the vehicle;
an actuator (70) that controls the throttle body (52) and is attached to the throttle body (52), in the vicinity of the opening sensor (68), in the same vehicle direction as the opening sensor (68); and
a first wiring coupler (80) that connects the opening sensor (68) to an external component and a second wiring coupler (81) that connects the actuator (70) to the external component, the first and second wiring couplers (80), (81) being individually arranged along the front/rear direction so as to intersect with respect to the axis of the throttle valve shaft (64).

2. A small vehicle according to claim 1, wherein:
the opening sensor (68) and the actuator (70) are aligned in the up/down direction on the throttle body (52): and
the second wiring coupler (81) of the actuator (70) is disposed away from the intake path (52a) of the throttle body (52) and inclined at an acute angle so as to be near the intake path (52a).

3. A small vehicle according to claim 2, wherein:
the small vehicle (1) is provided with a hanging portion (40) under the power unit (5), for holding the power unit (5) on the body frame: and
the throttle body (52) is positioned immediately above the hanging portion (40) and higher than the power unit (5).

4. A small vehicle according to claim 3, wherein:
the body frame (4) of the small vehicle includes a pair of left and right rear frames (20L, 20R) and a cross member (21) attached therebetween;
the cross member (21) is placed in front of the first and second wiring couplers (80, 81); and
wires from both of the wiring couplers (80,81) are guided to an area surrounded by the cross member (21), the pair of left and right rear frames (20L, 20R) and the upper surface of the power unit (5).

5. A small vehicle according to claim 4, wherein
the wires are turned in the area backward to the rear of the vehicle, turned forward again in a U shape so as to cross the vehicle in the width direction in front of the rear wheel (34), and coupled with a wire of a starter motor (82) disposed on the upper surface of the power unit (5).

6. A small vehicle according to claim 4 or 5, wherein
the cross member (21) is curved so as to upwardly project to the front of the vehicle.

7. A small vehicle according to any of claims 4 to 6, wherein
one of the pair of left and right rear frames (20L, 20R) is formed at a different position in the up/down direction from the other so that the cross member (21) is positioned near both of the wiring couplers (80, 81).

8. A small vehicle according to claim 2, wherein :
one of the opening sensor (68) and the actuator (70) is provided with attachment members (71) aligned with each other in the front/rear direction of the vehicle; and
the other of the opening sensor (68) and the actuator (70) is provided with an attachment member (69) aligned on a line in the up/down direction between the attachment members (71).

9. A small vehicle according to claim 1 or 8, wherein :
the throttle body (52) is held by an inlet manifold (53) formed independently from a cylinder head (42) of the internal combustion engine (2); and
an area in which an attachment tool for attaching the inlet manifold (53) to the cylinder head (42) is inserted overlaps the first and second wiring couplers (80,81) when viewed from the width direction of the vehicle and positioned nearer the center of the vehicle than the wiring couplers (80,81) when viewed in the up/down direction.

10. A small vehicle according to claim 9, wherein
the wires of both of the wiring couplers (80, 81) are joined nearer the inlet manifold (53) side than a mating surface between the inlet manifold (53) and the throttle body (52).

## Patentansprüche

1. Kleinfahrzeug, das mit einer Antriebseinheit (5) und einer Verdrahtungskonfiguration für eine Drosselklappe in dem Kleinfahrzeug (1) ausgestattet ist, wobei die Antriebseinheit (5) integriert eine Brennkraftmaschine (2) und ein Kraftübertragungssystem (3) für ein Hinterrad (34) umfasst, wobei die Antriebseinheit (5) schwingfähig an einem Karosserierahmen (4) montiert und unter einem Sitz (6) angeordnet ist, wobei die Verdrahtungskonfiguration umfasst:
eine Drosselklappe (52), die die Lufteinlassmenge der Brennkraftmaschine (2) steuert und zwischen der Antriebseinheit (5) und dem Sitz (6) angeordnet ist; und **dadurch gekennzeichnet, dass** die Verdrahtungskonfiguration ferner umfasst:
einen Öffnungssensor (68), der den Grad der Drosselklappenöffnung erfasst und an einem Ende einer Drosselventilwelle (64) der Drosselklappe (52) vorgesehen ist, wobei die Drosselventilwelle (64) entlang der Breitenrichtung des Fahrzeugs ausgerichtet ist;
ein Betätigungselement (70), das die Drosselklappe (52) steuert und an der Drosselklappe (52) in der Nähe des Öffnungssensors (68) in der gleichen Fahrzeugrichtung wie der Öffnungssensor (68) angebracht ist; und
einen ersten Verdrahtungskoppler (80), der den Öffnungssensor (68) mit einer externen Komponente verbindet, sowie einen zweiten Verdrahtungskoppler (81), der das Betätigungselement (70) mit der externen Komponente verbindet, wobei der erste und der zweite Verdrahtungskoppler (80), (81) individuell entlang der vorne/hinten-Richtung derart angeordnet sind, dass sie die Achse der Drosselventilwelle (64) schneiden.

2. Kleinfahrzeug nach Anspruch 1, wobei:
der Öffnungssensor (68) und das Betätigungselement (70) in der oben/unten-Richtung an der Drosselklappe (52) ausgerichtet sind; und
wobei der zweite Verdrahtungskoppler (81) des Betätigungselements (70) von dem Einlasspfad (52a) der Drosselklappe (52) entfernt angeordnet und unter einem spitzen Winkel derart geneigt ist, dass er nahe dem Einlasspfad (52a) ist.

3. Kleinfahrzeug nach Anspruch 2, wobei:
das Kleinfahrzeug (1) mit einem Aufhängungsbereich (40) unter der Antriebseinheit (5) zum Halten der Antriebseinheit (5) an dem Karosserierahmen versehen ist; und
wobei die Drosselklappe (52) unmittelbar über dem Aufhängungsbereich (40) und höher als die Antriebseinheit (5) positioniert ist.

4. Kleinfahrzeug nach Anspruch 3, wobei:
der Karosserierahmen (4) des Kleinfahrzeugs ein Paar von linken und rechten Hinterrahmen (20L, 20R) sowie ein dazwischen angebrachtes Querelement (21) umfasst;
wobei das Querelement (21) vor dem ersten und dem zweiten Verdrahtungskoppler (80, 81) angeordnet ist; und
wobei Drähte von beiden Verdrahtungskopplern (80, 81) zu einem Bereich geführt sind, der umgeben ist von dem Querelement (21), dem Paar von linken und rechten Hinterrahmen (20L, 20R) und der oberen Fläche der Antriebseinheit (5).

5. Kleinfahrzeug nach Anspruch 4, wobei die Drähte in dem Bereich rückwärts zur Rückseite des Fahrzeugs umgeleitet werden, dann wieder in einer U-Form derart nach vorne umgeleitet werden, dass sie das Fahrzeug in der Breitenrichtung vor dem Hinterrad (34) schneiden, und mit einem Draht eines Startermotors (82) gekoppelt sind, der an der oberen Fläche der Antriebseinheit (5) angeordnet ist.

6. Kleinfahrzeug nach Anspruch 4 oder 5, wobei das Querelement (21) derart gekrümmt ist, dass es aufwärts zur Vorderseite des Fahrzeugs hin vorsteht.

7. Kleinfahrzeug nach einem der Ansprüche 4 bis 6, wobei einer von dem Paar von linken und rechten Hinterrahmen (20L, 20R) in der oben/unten-Richtung an einer anderen Position als der andere gebildet ist, so dass das Querelement (21) nahe beiden der Verdrahtungskoppler (80, 81) positioniert ist.

8. Kleinfahrzeug nach Anspruch 2, wobei:
der Öffnungssensor (68) oder das Betätigungselement (70) mit Anbringungselementen (71) versehen ist, die miteinander in der vorne/hinten-Richtung des Fahrzeugs ausgerichtet sind; und
der jeweils andere von dem Öffnungssensor (68) und dem Betätigungselement (70) mit einem Anbringungselement (69) versehen ist, das in der oben/unten-Richtung auf einer Linie zwischen den Anbringungselementen (71) ausgerichtet ist.

9. Kleinfahrzeug nach Anspruch 1 oder 8, wobei:
die Drosselklappe (52) von einem Einlasskrümmer (53) gehalten wird, der unabhängig von einem Zylinderkopf (42) der Brennkraftmaschine (2) gebildet ist; und
ein Bereich, in den ein Anbringungswerkzeug zum Anbringen des Einlasskrümmers (53) am Zylinderkopf (42) eingeführt wird, mit dem ersten und dem zweiten Verdrahtungskoppler (80, 81) überlappt, wenn er von der Breitenrichtung des Fahrzeugs betrachtet wird, und näher am Zentrum des Fahrzeugs als die Verdrahtungskoppler (80, 81) positioniert ist, wenn er in der oben/unten-Richtung betrachtet wird.

10. Kleinfahrzeug nach Anspruch 9, wobei die Drähte von beiden Verdrahtungskopplern (80, 81) näher an der Seite des Einlasskrümmers (53) verbunden sind als eine Passfläche zwischen dem Einlasskrümmer (53) und der Drosselklappe (52).

## Revendications

1. Petit véhicule doté d'une unité de puissance (5) et d'une configuration de câblage pour un corps de papillon des gaz dans ledit petit véhicule (1), ladite unité de puissance (5) comprenant de manière intégrée, un moteur à combustion interne (2) et un système de transmission de puissance (3) pour une roue arrière (34), l'unité de puissance (5) étant montée de manière oscillante sur un châssis (4) et disposée au-dessous d'un siège (6), la configuration de câblage comprenant :
un corps de papillon des gaz (52) qui régule la quantité d'admission d'air du moteur à combustion interne (2) et est disposé entre l'unité de puissance (5) et le siège (6) ; et
**caractérisé en ce que** ladite configuration de câblage comprend:
un capteur d'ouverture (68) qui détecte le degré d'ouverture du papillon des gaz et est prévu au niveau d'une extrémité d'un arbre de soupape de papillon des gaz (64) du corps de papillon des gaz (52), l'arbre de soupape de papillon des gaz (64) étant aligné le long du sens de la largeur du véhicule ;
un actionneur (70) qui commande le corps de papillon des gaz (52) et est fixé sur le corps de papillon des gaz (52), à proximité du capteur d'ouverture (68), dans la même direction de véhicule que le capteur d'ouverture (68) ; et
un premier coupleur de câblage (80) qui raccorde le capteur d'ouverture (68) à un composant externe et un second coupleur de câblage (81) qui raccorde l'actionneur (70) au composant externe, les premier et second coupleurs de câblage (80), (81) étant agencés individuellement le long de la direction avant/arrière afin de se croiser par rapport à l'axe de l'arbre de soupape de papillon des gaz (64).

2. Petit véhicule selon la revendication 1, dans lequel :
le capteur d'ouverture (68) et l'actionneur (70) sont alignés dans la direction ascendante/descendante sur le corps de papillon des gaz (52) ; et
le second coupleur de câblage (81) de l'actionneur (70) est disposé à distance de la trajectoire d'admission (52a) du corps de papillon des gaz (52) et incliné selon un angle aigu afin d'être à proximité de la trajectoire d'admission (52a).

3. Petit véhicule selon la revendication 2, dans lequel :
le petit véhicule (1) est prévu avec une partie de suspension (40) sous l'unité de puissance (5), pour maintenir l'unité de puissance (5) sur le châssis ; et
le corps de papillon des gaz (52) est positionné immédiatement au-dessus de la partie de suspension (40) et est plus haut que l'unité de puissance (5).

4. Petit véhicule selon la revendication 3, dans lequel :
le châssis (4) du petit véhicule comprend une paire de cadres arrière gauche et droit (20L, 20R) et une traverse (21) fixée entre eux ;
la traverse (21) est placée en face des premier et second coupleurs de câblage (80, 81) ; et
des fils provenant des deux coupleurs de câblage (80, 81) sont guidés vers une zone entourée par la traverse (21), la paire de cadres arrière gauche et droit (20L, 20R) et la surface supérieure de l'unité de puissance (5).

5. Petit véhicule selon la revendication 4, dans lequel
les fils sont ramenés dans la zone vers l'arrière du véhicule, ramenés vers l'avant à nouveau selon une forme de U afin de traverser le véhicule dans le sens de la largeur en face de la roue arrière (34), et couplés à un fil du moteur de démarreur (82) disposé sur la surface supérieure de l'unité de puissance (5).

6. Petit véhicule selon la revendication 4 ou 5, dans lequel
la traverse (21) est incurvée afin de faire saillie vers le haut vers l'avant du véhicule.

7. Petit véhicule selon l'une quelconque des revendications 4 à 6, dans lequel
l'un de la paire de cadres arrière gauche et droit (20L, 20R) est formé dans une position différente dans la direction ascendante/descendante par rapport à l'autre de sorte que la traverse (21) est positionnée à proximité des deux coupleurs de câblage (80, 81).

8. Petit véhicule selon la revendication 2, dans lequel :
l'un parmi le capteur d'ouverture (68) et l'actionneur (70), est prévu avec des éléments de fixation (71) alignés les uns par rapport aux autres dans la direction avant/arrière du véhicule ; et
l'autre parmi le capteur d'ouverture (68) et l'actionneur (70) est prévu avec un élément de fixation (69) aligné sur une ligne dans la direction ascendante/descendante entre les éléments de fixation (71).

9. Petit véhicule selon la revendication 1 ou 8, dans lequel :
le corps de papillon des gaz (52) est maintenu par un collecteur d'entrée (53) formé indépendamment d'une culasse (42) du moteur à combustion interne (2) ; et
une zone dans laquelle un outil de fixation pour fixer le collecteur d'entrée (53) à la culasse (42) est inséré, chevauche les premier et second coupleurs de câblage (80, 81), lorsqu'elle est observée dans le sens de la largeur du véhicule et positionnée plus près du centre de véhicule que les coupleurs de câblage (80, 81), lorsqu'elle est observée dans la direction ascendante/descendante.

10. Petit véhicule selon la revendication 9, dans lequel
les fils des deux coupleurs de câblage (80, 81) sont assemblés plus près du côté du collecteur d'entrée (53) que d'une surface de couplage entre le collecteur d'entrée (53) et le corps de papillon des gaz (52).
